# EUROPEAN PATENT APPLICATION

(11) **EP 3 046 195 A1**
(43) Date of publication of application: **20.07.2016**
(21) Application number: 15199544.6
(22) Date of filing: 11.12.2015
(51) Int. Cl.: H02G 3/32, B60R 16/02, B64D 1/00

(54) **CABLE CLAMP**

(30) Priority: 19.01.2015 JP 2015007703
(71) Applicant: Mitsubishi Aircraft Corporation, Nishikasugai-Gun Aichi 480-0287 (JP)
(72) Inventor: Yokoi, Takashi, Aichi, 480-0287 (JP)
(74) Representative: Henkel, Breuer & Partner

(57) **Abstract**

The present invention provides a transport machine such as an aircraft (1), into the transport machine, an electronic device (30) that generates an electromagnetic wave is carried, the transport machine including: a cable (27) to which the electronic device (30) is connected; a clamp (31) having a clamp body (32), the clamp body (32) holding the cable (27); and a medium (31A) that is provided inside the clamp body (32) to absorb the electromagnetic wave conducted through the cable (27).

## Description

### BACKGROUND OF THE INVENTION

### Field of the Invention

The present invention relates to countermeasures against electromagnetic waves emitted from electronic devices that are carried onboard a transport machine such as an aircraft.

### Description of the Related Art

It is necessary to ensure airworthiness of aircraft such that various devices including a navigation device and a communication device do not malfunction even in high intensity radiated fields (HIRF) due to electric waves emitted from a television station, a radio station, radar and satellite communication systems, or the like.

Thus, an opening portion (a window and a door) of an airframe, which works as a slot through which electromagnetic waves enter, is provided with an electromagnetic shielding member. For example, an electrically-conductive mesh that is formed by applying metal plating to a fiber fabric is sandwiched between window panels (JP 2003-523911A).

Various electronic devices such as computers provided in various communication devices or radio-navigation devices, and amusement devices are mounted on aircraft. Each of the electronic devices generates unintended electromagnetic waves that are emissions such as harmonics as well as an intended electromagnetic wave such as a clock signal and a control signal.

Electronic devices mounted on aircraft, and an airframe are designed such that the mounted electronic devices do not electromagnetically interfere with each other, and the mounted electronic devices do not electromagnetically interfere with an antenna that is installed outside the airframe. However, there exists a potential risk of electromagnetic interference since various electronic devices carried onboard by passengers and crews are used at the same time in various places inside the aircraft.

Thus, an object of the present invention is to inhibit electromagnetic interference by electronic devices carried onboard.

### SUMMARY OF THE INVENTION

The present invention provides a transport machine into which an electronic device that generates an electromagnetic wave is carried, the transport machine including: a cable to which the electronic device is connected; a clamp having a clamp body, the clamp body holding the cable; and a medium that is provided inside the clamp body to absorb the electromagnetic wave conducted through the cable.

One example of the transport machine is an aircraft having an airframe, and the electronic device is carried into the airframe. In this case, the airframe of the aircraft includes the cable, clamp, and medium, which are mentioned above.

The medium in the present invention is preferably a ferrite core containing ferrite.

An electromagnetic wave emitted from an electronic device that is connected to the transport machine (e.g. the airframe of the aircraft) out of electronic devices carried onboard, and conducted to the cable is absorbed by the medium positioned inside the clamp body that holds the cable. Thus, electromagnetic interference by conduction from the electronic device carried onboard can be inhibited.

The clamp in the present invention can be configured to include the clamp body that internally receives the cable, and the medium that is interposed between the clamp body and the cable.

Preferably, the clamp in the present invention further includes a cover that is fitted to at least the clamp body out of the clamp body and the medium since the cover can protect the clamp body and the medium.

In accordance with the present invention, it is possible to inhibit the electromagnetic interference by the electronic device that is carried onboard the transport machine such as the aircraft, and ensure a normal operation of the transport machine.

### BRIEF DESCRIPTION OF THE DRAWINGS

FIG. 1 is a cross-sectional view of a cabin of an aircraft according to an embodiment of the present invention;
FIG. 2A is a view illustrating a cable and a cable clamp, FIG. 2B is a perspective view of a core as a medium that is provided inside a clamp body to absorb an electromagnetic wave conducted through the cable, and FIG. 2C is a perspective view of the cable clamp; and
FIG. 3 is a view illustrating a modification of the present invention.

### DETAILED DESCRIPTION OF THE PREFERRED EMBODIMENTS

In the following, embodiments of the present invention will be described by reference to the accompanying drawings.

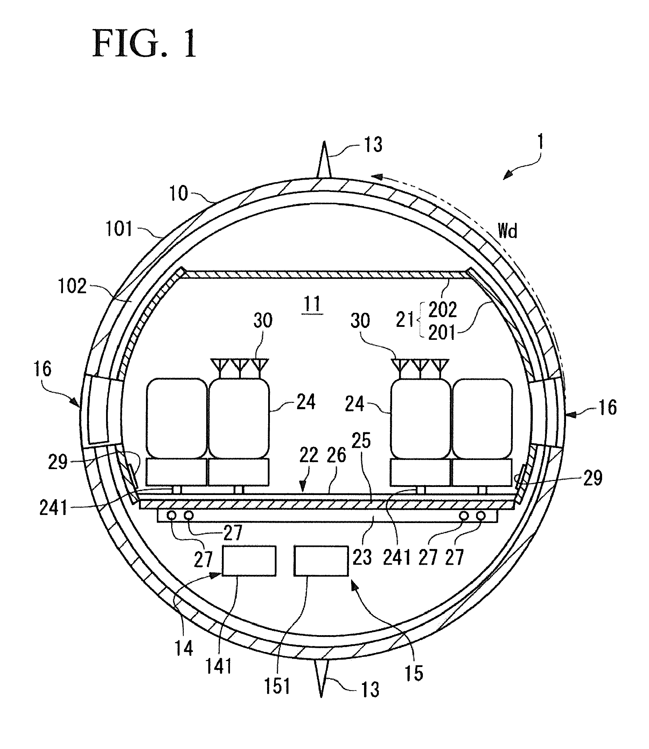

An aircraft 1 includes compartments such as a cabin 11 shown in FIG. 1, and a cockpit (not shown) and a cargo compartment (not shown) inside a fuselage 10.

An outboard antenna 13 is installed outside the fuselage 10. A plurality of outboard antennas 13 are provided on each of an upper portion and a lower portion of the fuselage 10.

A communication system 14 provided in the aircraft 1 includes a computer device 141 that is installed onboard, and a predetermined outboard antenna 13, and performs radio communication with a ground control station or other aircraft via the outboard antenna 13.

A navigation system 15 provided in the aircraft 1 also includes a computer device 151 that is installed onboard, and a predetermined outboard antenna 13, and obtains a direction, a distance, an altitude, or the like required for a flight to a destination through radio communication between the outboard antenna 13 and a ground-based navigation aid.

The aircraft 1 is equipped with a plurality of systems in addition to the communication system 14 and the navigation system 15. Electronic devices constituting the respective systems are mounted onboard.

The cabin 11 is a compartment that is defined in a predetermined range of the fuselage 10 to allow passengers to stay.

The cabin 11 is provided with a plurality of windows 16 that are positioned in side surfaces of the fuselage 10, and a door (not shown).

In order to avoid a problem that electromagnetic waves emitted from ground facilities are transmitted through a laminate of window panels positioned in each of the windows 16 to electromagnetically interfere with the electronic devices mounted onboard, an electromagnetic shielding layer is interposed between the window panels. Also, in order to avoid a problem that a gap between the door of the cabin 11 and the fuselage 10 works as an electromagnetic slot, an electromagnetic shielding layer is formed on a seal member of the door.

An interior material 21 constituting a wall (including a ceiling), and a floor material 22 constituting a floor are provided inside the cabin 11.

The interior material 21 has a wall panel 201 that rises from the floor material 22, and a ceiling panel 202 that faces the floor material 22.

The wall panel 201 covers the back surface of the skin 101, and is provided on the stringers positioned on the back surface of the skin 101.

The ceiling panel 202 is disposed so as to connect the right and left wall panels 201, and faces the back surface of the skin 101. Accessories (not shown) or the like are disposed between the ceiling panel 202 and the skin 101.

The floor material 22 is installed inside the fuselage 10 as a member on which seats 24 are installed.

The floor material 22 includes floor beams 23, seat rails 241, a floor panel 25, and a floor carpet 26.

Cables 27 that include a power supply line for supplying electric power to various devices mounted on the aircraft 1 and a signal line for transmitting and receiving signals between devices, and pipes (not shown) that supply a hydraulic pressure to a driving unit of a flight control surface, and supply bleed air to an air-conditioner are provided in a space below the floor panel 25. The cables 27 and the pipes are passed through openings formed in the floor beams 23.

Portable electronic devices that operate in the high-frequency band are carried onboard by passengers and crews. Examples of the electronic devices (PEDs: personal electronic devices) 30 include a notebook or tablet personal computer (PC), a mouse wirelessly connected to the PC, a mobile phone, a smartphone, a game machine, a digital camera, a video camera, a music/video player such as a CD (compact disc) player and a DVD (digital versatile disk) player, a headphone wirelessly connected to the music/video player, an electronic toy, and an RFID (radio frequency identification) tag that is attached to cargo.

Formerly, onboard use of the PEDs was prohibited even during cruising except for an electronic device that generates no electric wave (no electromagnetic wave) during operation, such as a digital camera and a CD player, and an electronic device (a PC, a game machine, or the like) in a state in which a function of generating an electric wave is stopped. However, because of recent easing of regulations, use of the PEDs is widely permitted.

At present, onboard use of not only radio communication between onboard electronic devices such as between a mouse and a PC and between a headphone and a CD player, but also radio communication such as a phone call and internet connection with the outside of the aircraft using a PC, a mobile phone, a smartphone, and a game machine are permitted at all times as long as the devices are set to a flight mode, and the communication is performed via onboard radio equipment (Wi-Fi (Registered trademark), Bluetooth (Registered trademark), or the like).

Various frequencies are used in the PEDs 30 that are used onboard, and various types of communication standards also exist.

Since the variety of PEDs 30 as described above are used in various places inside the aircraft, there exists a potential risk of electromagnetic interference by electromagnetic waves emitted from the PEDs 30.

Objects to which the electromagnetic waves emitted from the PEDs 30 are coupled are as follows:
(1) the outboard antennas 13;
(2) the electronic devices mounted on the aircraft 1 (regardless of whether they generate electric waves or not); and
(3) the cables 27 for power supply and signal transmission.

The electronic devices of (2) include the computer device 141 of the communication system 14 and the computer device 151 of the navigation system 15.

While all of (1) to (3) described above relate to coupling of electromagnetic waves radiated from the PEDs 30, there is coupling by conduction from the PEDs 30 that are connected to an airframe in addition to the coupling by radiation. The conduction coupling may occur, for example, when the PEDs 30 (a PC or the like) are wire-connected to a power outlet 29 that is provided around the seat of the airframe. Electromagnetic waves emitted from the PEDs 30 that are connected to the power outlet 29 may be conducted and coupled to the cables 27 installed below the floor material 22.

In the present embodiment, the conduction coupling is mainly discussed. In order to inhibit the conduction coupling, clamps that hold the cables 27 laid below the floor material 22 are provided with a function of absorbing electromagnetic waves.

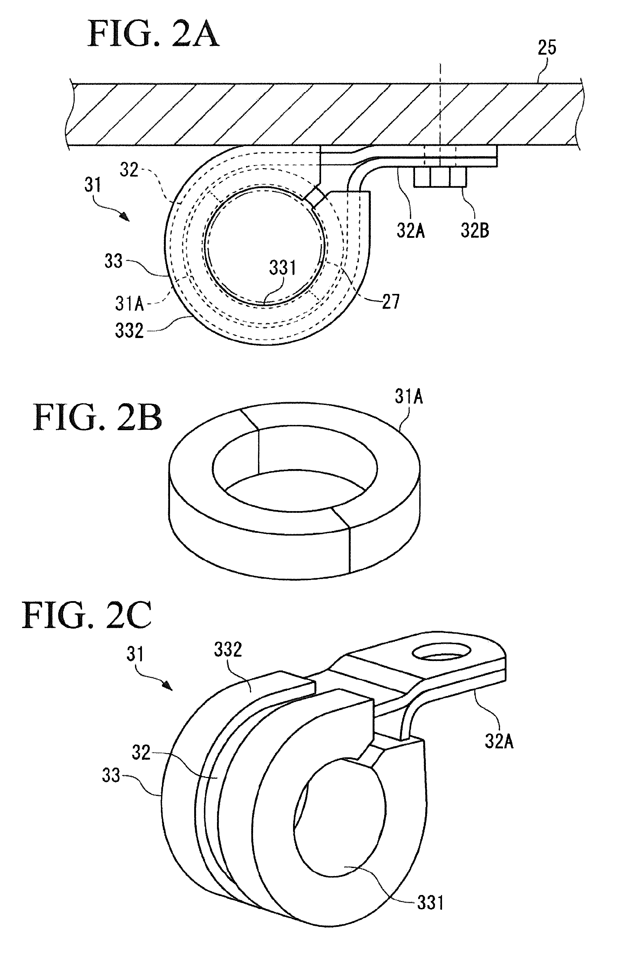

Each of the cables 27 is composed of a single or a plurality of electric wires (not shown), and is held by a clamp 31 shown in FIGS. 2A and 2C. A plurality of clamps 31 are provided at intervals in a length direction of the cable 27. Each of the clamps 31 is fixed to the floor panel 25 directly or via a bracket (not shown).

The clamp 31 includes a P-shaped clamp body 32 that is formed of a metal material such as aluminum alloy and stainless steel, or a fiber reinforced resin, an annular core 31A (FIG. 2B) that is disposed inside the clamp body 32, and a resin cover 33 that is fitted to the clamp body 32 and the core 31A.

The clamp 31 is fastened to the floor panel 25 by a bolt 32B that passes through a tab 32A of the clamp body 32.

The cover 33 has flexibility, and is removably provided on the clamp body 32.

The cover 33 protects the cable 27 tightened by the clamp body 32 from wear and damage, and absorbs vibrations applied to the cable 27.

The cover 33 also protects the core 31A.

The cover 33 covers an annular portion excluding the tab 32A of the clamp body 32, and the entire core 31A.

The cover 33 integrally includes an inner peripheral portion 331 corresponding to an inner periphery of the core 31A, and an outer peripheral portion 332 corresponding to an outer periphery of the clamp body 32.

The inner peripheral portion 331 is formed in a substantially annular shape along an inner peripheral surface of the core 31A.

The outer peripheral portion 332 is provided on opposite sides in a width direction of the clamp body 32.

The cover 33 is fitted to the clamp body 32 and the core 31A such that the clamp body 32 and the core 31A are sandwiched between the inner peripheral portion 331 and the outer peripheral portion 332.

The core 31A absorbs an electromagnetic wave in a high-frequency band of, for example, 100 MHz or more.

The core 31A takes in electromagnetic energy based on a magnetic loss, converts the electromagnetic energy to thermal energy and consumes the thermal energy therein.

As a material of the core 31A, a ferromagnetic material represented by ferrite can be suitably used.

Ferrite is used for the core 31A of the present embodiment. The ferrite core 31A reduces the electromagnetic wave conducted through the cable 27 since impedance becomes high in a frequency band higher than about several tens MHz. The core 31A functions as a high-pass filter that blocks noise and passes a basic transmission signal. The core 31A absorbs the frequency band of 100 MHz or more.

The core 31A is divided into two portions, which are disposed so as to surround an outer peripheral portion of the cable 27.

A thickness and a length of the core 31A can be appropriately determined according to the frequency band of the electromagnetic wave to be absorbed based on the magnetic loss.

Electromagnetic waves that include clock signals and control signals used in the PEDs 30, such as a PC, that are wire-connected to the power outlet 29, and unnecessary emissions secondarily generated from the clock signals and the control signals are conducted to the power supply line that supplies electric power to the power outlet 29, or to another electric wire held by the same clamp 31 as that of the power supply line. Since the electromagnetic waves are absorbed by the core 31A included in the cover 33 of the clamp 31, electrostatic coupling and magnetic field coupling of the electromagnetic waves to the cables 27 can be avoided.

Therefore, it is possible to stably supply electric power to the mounted devices without generating noise in the power supply line and the signal transmission line to which the electromagnetic waves are conducted from the PEDs 30, and it is also possible to ensure a communication quality.

The clamp 31 is not limited to the P shape, and any form may be employed.

While all the clamps 31 that hold the cables 27 can be provided with the electromagnetic wave absorbing function, the electromagnetic wave absorbing function can be given at positions where the conduction coupling easily occurs due to a reason that the cable 27 is located close to the power outlet 29 or the like, or to only the clamp 31 that holds the cable 27 in which an electric wire that more largely affects flight safety when the conduction coupling occurs is included.

When only some of the clamps 31 are provided with the electromagnetic wave absorbing function, the clamp 31 that is not provided with the electromagnetic wave absorbing function may be composed of only the clamp body 32 and the cover 33 without providing the core 31A. Accordingly, a cost, a weight or the like can be suppressed.

When it becomes necessary to perform antinoise measures on a portion of the cable 27 or some of electric wires after the cable 27 is laid in the airframe, the core 31A may be disposed along the outer peripheral portion of the cable 27 at a position of the clamp 31 that is positioned at the relevant portion or that holds the electric wires.

In the present embodiment, in order to inhibit the coupling by radiation from the PEDs 30 in addition to the inhibition of the coupling by conduction from the PEDs 30, the interior material 21 and the floor material 22 that form the insides of the compartments such as the cabin 11, the cockpit, and the cargo compartment, or onboard members such as the seats 24 can include a medium that absorbs electromagnetic waves. The medium takes in electromagnetic energy based on at least one of a dielectric loss, a magnetic loss, and an electrically-conductive loss (a resistive loss), converts the electromagnetic energy to thermal energy and consumes the thermal energy therein.

By causing the interior material 21, the floor material 22, or the like to include the medium, a loss of the electromagnetic waves in an interference path (IPL: interference path loss) from the onboard PEDs 30 to an object of interference (the above (1) to (3)) is increased, so that the electromagnetic waves can be attenuated.

For example, a thin film containing a ferromagnetic material represented by ferrite, soft-magnetic metal, or carbon is formed as the medium that absorbs an electromagnetic wave in a high-frequency band of 100 MHz to 18 GHz by plating, vapor deposition or the like on surfaces of the interior material 21 and the floor panel 25. A sheet formed by using a ferromagnetic material, soft-magnetic metal, or carbon may also be attached to the surfaces of the interior material 21 and the floor panel 25. Alternatively, fine particles as the medium may be mixed into materials of the interior material 21 and the floor panel 25. It is also possible to mix particles of a ferromagnetic material, soft-magnetic metal, or carbon into fibers constituting the floor carpet 26.

The electromagnetic waves radiated from the PEDs 30 are converted into thermal energy by a reflection loss and an absorption loss (a sum of a dielectric loss, a magnetic loss, and an electrically-conductive loss) by the medium included in the floor material 22 and the interior material 21 and are thereby lost while the electromagnetic waves are reflected, for example, two or three times by the skin 101 and the floor panel 25 that are conductors. The electromagnetic waves are mainly attenuated by the absorption loss. Since an interference path loss based on the absorption loss is large, it is possible to avoid the coupling to the outboard antennas 13 due to the electromagnetic waves leaking out of the aircraft through opening portions such as the windows 16 and the door.

Also, since the interior material 21 or the floor material 22 exists in both of a radiation interference path from the PEDs 30 to the mounted electronic devices including the computer device 141 of the communication system 14 and the computer device 151 of the navigation system 15, and a radiation interference path from the PEDs 30 to the cables 27, the coupling to the mounted electronic devices and the cables 27 through the interference paths can also be avoided.

Causing the interior material 21, the floor material 22, or the like to include the medium that absorbs the electromagnetic wave is particularly effective for a case in which countermeasures such as the electromagnetic shield are taken for the opening portions such as the windows and the door based on a need for ensuring airworthiness against an HIRF environment. When the countermeasures such as the electromagnetic shield are taken for the opening portions, and the electromagnetic wave is repetitively reflected onboard to cause a resonance phenomenon, the risk of electromagnetic interference is increased. However, since the electromagnetic wave is absorbed by the medium included in the interior material 21, the floor material 22, or the like, it is possible to prevent resonance from occurring, and inhibit the electromagnetic interference.

The configurations described in the aforementioned embodiments may also be freely selected or appropriately changed into other configurations without departing from the gist of the present invention.

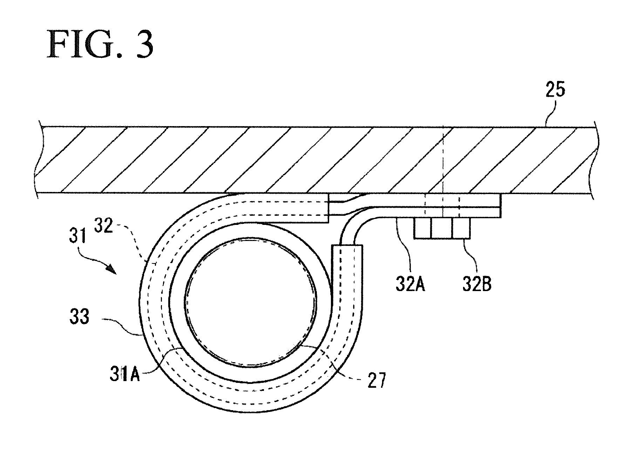

For example, in an example shown in FIG. 3, the core 31A is interposed between the clamp 31 and the cable 27. Accordingly, effects similar to those of the above embodiment can also be obtained.

As long as the medium absorbs the electromagnetic wave in a predetermined high-frequency band corresponding to that of the electronic devices carried onboard, an appropriate material including those provided in future can be used as the medium of the present invention.

In order to inhibit the conduction coupling to the cable 27, a ferrite layer as the medium that absorbs the electromagnetic wave based on the magnetic loss can be formed on, for example, a surface of a jacket that is the outer peripheral portion of the cable 27, and a coating of the electric wire included in the cable 27 instead of or in addition to disposing the ferrite core 31A between the clamp body 32 and the cable 27.

Also, fine particles of ferrite as the medium that absorbs the electromagnetic wave may be mixed into the cover 33 and the clamp body 32 of the clamp 31, and a protective coating and a heat-shrinkable tube of the cable.

The present invention can be widely applied to transport machines such as ships, trains, and buses in addition to the aircraft.

## Claims

1. A transport machine into which an electronic device that generates an electromagnetic wave is carried, the transport machine comprising:
a cable to which the electronic device is connected;
a clamp having a clamp body, the clamp body holding the cable; and
a medium that is provided inside the clamp body to absorb the electromagnetic wave conducted through the cable.

2. The transport machine according to claim 1,
wherein the transport machine is an aircraft comprising an airframe, the electronic device being carried into the airframe,
the airframe comprises the cable, the clamp, and the medium.

3. The transport machine according to claim 1 or claim 2,
wherein the medium is a ferrite core containing ferrite.

4. The transport machine according to any one of claims 1 to 3,
wherein the clamp includes
the clamp body that internally receives the cable, and
the medium that is interposed between the clamp body and the cable.

5. The transport machine according to claim 4,
wherein the clamp further includes a cover that is fitted to at least the clamp body out of the clamp body and the medium.

6. The transport machine according to claim 3,
wherein the ferrite core includes a plurality of segments, and has an annular shape as a whole.

7. The transport machine according to any one of claims 1 to 6,
wherein the medium absorbs the electromagnetic wave in a band of 100 MHz or more.

8. The transport machine according to any one of claims 1 to 7,
wherein the medium is configured to function as a high-pass filter.

9. The transport machine according to any one of claims 1 to 8,
wherein the transport machine comprises a floor panel, and
the clamp body is fastened to the floor panel.

10. The transport machine according to any one of claims 1 to 9,
wherein the clamp body has a P shape,
the medium is an annular ferrite core, and
the annular ferrite core is disposed inside the clamp body.

11. The transport machine according to claim 10,
wherein the clamp further comprises a resin cover, and the cover is fitted to the clamp body and the ferrite core.

12. The transport machine according any one of claims 1 to 11,
wherein the cable is a power supply line for supplying electric power to devices mounted on the transport machine or a signal line for transmitting and receiving signals between the devices.
